# EUROPÄISCHE PATENTSCHRIFT

(11) **EP 3 155 686 B1**
(45) Veröffentlichungstag und Bekanntmachung des Hinweises auf die Patenterteilung: **14.08.2019**
(21) Anmeldenummer: 15732525.9
(22) Anmeldetag: 10.06.2015
(51) Int. Cl.: H01M 10/0525, H01M 10/0569, H01M 10/42, H01M 10/0567, H01M 10/0568

(54) **ELEKTROLYT, ZELLE UND BATTERIE UMFASSEND DEN ELEKTROLYT UND DESSEN VERWENDUNG**
ELECTROLYTE, CELL AND BATTERY COMPRISING THE ELECTROLYTE, AND USE OF THE ELECTROLYTE
ÉLECTROLYTE, ÉLÉMENT DE BATTERIE ET BATTERIE COMPRENANT L'ÉLECTROLYTE ET SON UTILISATION

(30) Priorität: 12.06.2014 DE 102014108254
(43) Veröffentlichungstag der Anmeldung: 19.04.2017
(73) Patentinhaber: Karlsruher Institut für Technologie (KIT), 76131 Karlsruhe (DE)
(72) Erfinder: HOFMANN, Andreas, 76297 Stutensee (DE); HANEMANN, Thomas, 76297 Stutensee (DE); SCHULZ, Michael, 76297 Stutensee (DE)
(86) Internationale Anmeldenummer: PCT/EP2015/001163
(87) Internationale Veröffentlichungsnummer: WO 2015/188932

(56) Entgegenhaltungen:
- EP-A1- 2 138 481
- CN-A- 102 035 022
- US-A1- 2009 325 065
- US-A1- 2011 053 003
- XUE LEIGANG ET AL: "Enhanced performance of sulfone-based electrolytes at lithium ion battery electrodes, including the LiNi0.5Mn1.5O4high voltage cathode", JOURNAL OF POWER SOURCES, ELSEVIER SA, CH, Bd. 262, 27. März 2014 (2014-03-27), Seiten 123-128, XP029025960, ISSN: 0378-7753, DOI: 10.1016/J.JPOWSOUR.2014.03.099
- J MACA ET AL: "Properties of Electrolytes for Li-ion Batteries with Higher Fire Safety", RENEWABLE ENERGY AND POWER QUALITY JOURNAL, no. 11, 1 March 2013 (2013-03-01), pages 1-4, XP055202495, ISSN: 2172-038X, DOI: 10.24084/repqj11.261

## Beschreibung

Die vorliegende Erfindung betrifft einen Elektrolyten für Li-Ionen-Batterien, ein Verfahren zu seiner Herstellung und seine Verwendung sowie eine Lithium-Ionen-Batterie, die einen erfindungsgemäßen Elektrolyten umfasst.

Die Erfindung ist auf dem Gebiet der Energiespeichersysteme angesiedelt und betrifft Gemische, die als Elektrolyte in Li-Ionen-Zellen, die ein Hauptbestandteil von Lithium-Ionen Batterien, eingesetzt werden. Eine Lithium-Ionen Zelle wird allgemein definiert als ein elektrochemisches Element, worin Lithium-Ionen als ionische Ladungsträger auftreten. Die typischen Anforderungen an einen Energiespeicher auf Batterieebene, insbesondere bezüglich dessen Energiedichte, Leistungsdichte, Sicherheit, Langlebigkeit, Umweltverträglichkeit und Kosten, gelten auf Zellebene und schließlich für die einzelnen Komponenten, d. h. auch für Elektrolyte.

Voraussetzungen für einen Elektrolyten in Li-Ionen-Zellen sind:
- eine möglichst hohe Leitfähigkeit und eine möglichst niedrige Viskosität
- eine hohe Ionenleitfähigkeit, speziell eine ausreichende Lithium-Ionenleitfähigkeit
- gute Benetzungseigenschaften des Separators und der Elektrodenmaterialien
- eine ausreichende Spannungsstabilität in der Zelle (bis 4,5 V vs. Li/Li⁺ für heutige kommerzielle Materialien)
- gute Löslichkeitseigenschaften für anorganische und organische Salze (speziell für Leitsalze)
- ein möglichst hoher Flammpunkt, um Sicherheit bei Störfällen zu gewährleisten
- keine Korrosion an den eingesetzten Materialien, speziell Aluminium und Kupfer
- ein Leitsalz, das die elektrochemischen Eigenschaften erfüllt und Li⁺ bereitstellt, und zudem ungiftig ist und keine toxische' Zersetzungsprodukte bildet, insbesondere kein Fluorwasserstoff (HF).
- Langzeitstabilität in der Zelle
- Möglichst hohe erreichbare Lade bzw. Entladeraten (C-Raten) in der Zelle.

Die C-Rate gibt den Lade- bzw. Entladefaktor bezogen auf die Zellkapazität an. 1C entspricht dabei derjenigen Stromstärke (in Ampere), die an der Zelle konstant anliegt und innerhalb von einer Stunde die gesamte verfügbare Kapazität (angegeben in Amperestunden) der Zelle zu- bzw. abführt. Die Stromstärke für n·C berechnet sich zu n·Kapazität/h, d.h. bei 2C beträgt die Stromstärke gerade der doppelten Zellkapazität dividiert durch lh. Maximal kann die Stromstärke bei einer Rate von 2C folglich ½ h an der Zelle anliegen, bis die volle Zellkapazität erreicht bzw. erschöpft ist. In der Praxis wird die berechnete Zeit (t = 1h/C) nur für kleine C-Raten erreicht, da die verfügbare Kapazität mit höheren C-Raten abnimmt.

DE 10 2012 212956 A1 zeigt, wie der Sicherheitsaspekt von Li-Ionen-Zellen wird heutzutage durch Schutzschaltungen oder zusätzliche Umverpackungen (z.B.) erreicht wird. Diese können ggf. ausfallen oder versagen. Eine intrinsische Sicherheit in Form von Verwendung höher entflammbarer Mischungen ist deshalb von grundlegendem Interesse.

Heutzutage werden in Li-Ionen-Zellen mit flüssigen Elektrolyten Elektrolyte eingesetzt, die auf organischen Carbonaten und LiPF₆ beruhen. Diese Mischungen beinhalten niedrigsiedende (Siedepunkt unter 130°C) und höher siedende (Siedepunkt über 200°C) zyklische und lineare organische Carbonate. LiPF₆ wird als Leitsalz eingesetzt. Der Flammpunkt der heutigen Elektrolyte ist durch die Verwendung azyclischer Carbonate deutlich kleiner als 50°C (z.B. Ethylencarbonat (EC)/Dimethylcarbonat (DMC) + 1M LiPF₆, Flammpunkt gleich 31°C. Zudem zersetzt sich LiPF₆ bereits ab 60-70°C zu toxischen Gasprodukten wie HF und PF₅.

Um das Problem der Zellsicherheit in Zellen mit flüssigen Elektrolyten zu umgehen, werden Elektrolyte in Form von Feststoffelektrolyten eingesetzt. Nachteilig ist jedoch deren sehr niedrige Ionenleitfähigkeit. In DE 10 2007 030604 A1 wird bei einem festen Ionenleiter mit einer granatartigen Kristallstruktur nur eine Ionenleitfähigkeit von 0,04 mS/cm erreicht.

Eine weitere Alternative besteht in der Nutzung von Gelpolymerelektrolyte, welche die flüssigen Komponenten in einem Gel wie z.B. Polyvinylidenfluorid-Hexafluorophosphat (PVdF-HFP) gebunden enthalten. Dadurch bleiben die Probleme, die Elektrolyte hinsichtlich toxischer Zersetzungsprodukte und leichte Entflammbarkeit aufweisen, bestehen. In WO 2000 022686 A1 wird Sicherheit wird in dem Fall in Form eines Auslaufschutzes erreicht.

Ein Sicherheitsgewinn für Lithium-Ionen Zellen mit flüssigen Elektrolyten bringen zusätzliche ionische Flüssigkeiten (IL aus dem englischen Ionic Liquids), die als Zusatz oder Hauptkomponente des Elektrolyten eingesetzt werden. In DE 10 2004 018930 werden Elektrolyte mit hohen IL-Konzentrationen (> 80 Gew.-%, speziell genannt sind Imidazolium-basierte Ils) beschrieben. Eine Erhöhung der Sicherheit wird durch die Mischung mit ionischen Flüssigkeiten erreicht. Es wird auf die positiven Eigenschaften durch eine Mischung mit IL und organischen Lösungsmitteln hingewiesen, doch durch den Zusatz von ionischen Flüssigkeiten nimmt die Performance der Zellen stark ab. Ebenfalls nachteilig ist die deutlich reduzierte Lithium-Ionen-Beweglichkeit durch die Bildung von Li-IL-Komplexen. Dies führt zu einer deutlichen Zunahme der Viskosität und damit zu einer signifikanten Verschlechterung der Zellperformance, vor allem bei Verwendung von Graphithaltigen Elektroden. Besonders nachteilig ist der hohe Preis von ionischen Flüssigkeiten, der einer großtechnischen Anwendung entgegensteht. Die Verwendung von reinen ionischen Flüssigkeiten reduziert die erreichbare Lade bzw. Entladerate stark, sodass ein Entladen innerhalb kürzerer Zeitperioden (z. B. < 10 Stunden) kaum erreichbar sind. Ionische Flüssigkeiten sind Salzschmelzen mit Schmelzpunkten unter 100°C. Dies bedingt eine hohe Viskosität der Mischungen. Zudem wurde festgestellt, dass die Li-Ionenleitfähigkeit in IL-Mischungen im Vergleich zu kommerziell eingesetzten Mischungen reduziert ist.

Als mögliche weitere Elektrolytkomponente werden in der Literarur Sulfolane erwähnt. In Effect of sulfolane on the performance of LiBoB based electrolytes for advanced lithium ion batteries, Electrochimica Acta, Vol. 65, p.221, 2012 beschreiben Li et al. Mischungen von Sulfolanen mit Diethylcarbonat (DEC), aber es wird ein Flammpunkt unter 50°C erreicht. Ebenfalls beschrieben werden Mischungen von Sulfolan mit gamma-Butyrolacton. Sulfolan besitzt jedoch in Mischungen mit Leitsalzen eine relativ hohe Viskosität, so dass nur eine mäßige Zellperformance erreicht werden kann (<0,5 C). Sedlarikova et al. haben in Sulfolane as solvent for Lithium Battery Electrolytes, J. New Mat. Electrochem., Vol.16, p.65, 2013 gleichzeitig gezeigt, dass es alleine nicht ausreichend ist, um einen Langzeitschutz der Anode zu garantieren. Elektrolyte, die als Zusatz oder Hauptkomponente Sulfolan enthalten, sind gegenüber organischen Carbonaten etwas oxidationsempfindlicher und führen aufgrund der relativ hohen Viskosität von Sulfolan (reine Lösung: ca. 12 mPa.s) zu einer relativ schlechten Zellperformance. So beschreiben Lewandowski et al. in Properties of Li-graphite and LiFePO4 electrodes in LiPF6-sulfolane electrolyte, Electrochimica Acta, Vol. 56, p. 5972, 2011 eine Lithium-Ionen-Zelle mit LFP gegen Graphit und einem Sulfolan-basierten Elektrolyten mit hohem Flammpunkt von 150°C bis nur maximal 0.2C.

In WO 2009/022848 A1 und WO 2009/038358 A1 werden Mischungen von Ethylencarbonat und organischen Estern (z.B. Ethylpropionat) beschrieben mit dem Ziel der Performancesteigerung und der Langzeitzyklierbarkeit. Diese Mischungen weisen allerdings einen Flammpunkt deutlich unter 50°C auf. Der in WO2012169843 A2 verwendete Ester Isobutylpropionat weist einen Flammpunkt von lediglich 26-28°C auf. Isoamylpropionat besitzt einen Flammpunkt von 48°C. Auch in WO 2013/012250 A2 wird als Zusatz Ethylmethylcarbonat verwendet, welches einen Flammpunkt von lediglich 23°C aufweist.

In US 2011/0053003 A1 wird eine Lithium-Ionen-Zelle offenbart, die als Elektrolytmischung Ethylencarbonat (EC), Propylencarbonat (PC) und Sulfone mit einer Li-Quelle beinhalten. PC wird dabei als Lösungsmittel genutzt, um die weiteren Bestandteile des Elektrolyten zu lösen. Die Nutzung von PC verringert aber die Zellperformance. Gleichzeitig ist bekannt, dass PC leicht in die heutigen Graphitelektroden, die auf der Anodenseite eingesetzt werden, interkaliert und diese dadurch zerstört. Zusätzlich beträgt der Flammpunkt von PC lediglich 123°C. Die Veröffentlichung von J. Maca et al. mit dem Titel "Properties of Electrolytes for Li-ion Batteries with Higher Fire Safety",publiziert in RENEWABLE ENERGY AND POWER QUALITY JOURNAL, Nr. 11, Seiten 1-4,ISSN: 2172-038X, DOI: 10.24084/repqj11.261, zeigt einen für die Anwendung in Li-Ionen Batterien geeigneten Elektrolyten, welcher aus Lösemittelgemischen von 15 Vol.% bzw. 25 Vol.% Dimethylsulfon in Propylencarbonat bzw. Ethylencarbonat besteht. Das Leitsalz ist Lithiumperchlorat.

Ausgehend hiervon besteht die Aufgabe der vorliegenden Erfindung darin, die Einschränkungen und Nachteile des Standes der Technik zu überwinden. Insbesondere liegt der vorliegenden Erfindung somit die Aufgabe zugrunde, einen Elektrolyten für Li-Ionen- Zellen bereitzustellen, der zu einer erhöhten Sicherheit in diesen Zellen führt, ohne die Zellperformance zu beeinträchtigen.

Ferner besteht die Aufgabe der vorliegenden Erfindung darin, eine Verwendung solcher Elektrolyte vorzuschlagen.

Weiterhin besteht die Aufgabe der vorliegenden Erfindung darin, eine Lithium-Ionen Zelle sowie eine Lithium-Ionen Batterie bereitzustellen, die solche Elektrolyte umfassen. Diese Aufgabe wird im Hinblick auf den Elektrolyten für Lithium-Ionen Batterien durch die Merkmale des *Anspruchs 1,* hinsichtlich der Verwendung durch den *Anspruch* 7, im Hinblick auf die Lithium-Ionen Zelle durch den *Anspruch* 8 und hinsichtlich der Lithium-Ionen Batterie durch den *Anspruch* 9 gelöst. Die Unteransprüche beschreiben jeweils vorteilhafte Ausgestaltungen der Erfindung.

Die Lösung der Aufgabe basiert auf der Bereitstellung eines Elektrolyten für Lithium-Ionen Batterien umfassend ein Gemisch aus mindestens einem zyklischen Carbonat und mindestens ein Sulfonderivat sowie mindestens eine Lithiumquelle als Leitsalz, wobei das Gemisch einen Flammpunkt über 85°C bevorzugt über 100°C, besonders bevorzugt über 130°C aufweist. Das zyklische Carbonat und das Sulfonderivat dienen als Lösungsmittel, in denen die Leitsalze und die Additive gelöst sind.

In einer besonderen Ausgestaltung umfasst das zyklische Carbonat Ethylencarbonat (EC) oder einfach- bzw. mehrfachfluoriertes Ethylencarbonat oder eine Mischung aus mindestens 2 dieser Stoffe. Vorzugsweise ist das fluorierte Ethylencarbonat 4-Fluoro-1,3-dioxolan-2-on.

Gemäss der Erfindung umfasst das Sulfonderivat Dimethylsulfon (DMSN) oder Diethylsulfon oder eine Mischung derselben. Bei einem Gemisch aus DMSN und EC wird der Kristallisationspunkt überraschenderweise auf -10°C gesenkt, und dies ohne die Zugabe von Propylencarbonat (PC), welches sonst als Lösungsmittel genutzt wird. Werden Leitsalze zugegeben, sinkt der Kristallisationspunkt bis zu -45°C je nach Leitsalz. Ebenfalls überraschenderweise wurde gefunden, dass die Leitfähigkeit von Lithiumsalzen in Mischungen von EC und DMSN bei Raumtemperatur trotz der beiden hochschmelzenden Lösungsmittel über 4 mS/cm beträgt. Eine Rechnung auf Basis von ab-initio-Methoden führt zu HOMO Energien von -12,4 eV (DMSN) und -11,7 eV (EC), was einer hohen Oxidationsstabilität entspricht.

Vorzugsweise beträgt das Massenverhältnis des zyklischen Carbonats zu dem Sulfonderivat zwischen 100:1 und 3:1, bevorzugt zwischen 20:1 und 3:1 und besonders bevorzugt zwischen 10:1 und 3:1.

Vorzugsweise umfasst der erfindungsgemäße Elektrolyt das Leitsalz LiBF₄ oder LiPF₆ oder Lithium bis(trifluoromethansulfonyl)imid (LiTFSI) oder einer Mischung aus mindestens 2 dieser Leitsalze. Weiterhin umfasst das Leitsalz LiClO₄, LiAsF₆, LiSbF₆, LiCF₃SO₃, LiN(SO₂C₂F₅)₂, LiC(SO₂CF₃)₃, LiN(SO₃CF₃)₂, LiC₄F₉SO₃, LiAlO₄, LiAlCl₄, LiCl, LiI oder eine Mischung aus mindestens einem dieser Leitsalze mit mindestens einem der vorbenannten Leitsalze. Im Falle von LiPF₆ ist eine bessere Zellperformance gegeben, aufgrund der besseren Dissoziation von LiPF₆ verglichen mit LiBF₄. Um LiBF₄ besser zu lösen, wird vorzugsweise Tris(pentafluorophenylboran) (TPFPB) bevorzugt bis zu 0,1 mol pro kg Elektrolyt in das Lösungsmittel hinzugefügt. LiBF₄ und LiTFSI hingegen sind thermisch deutlich stabiler als das üblicherweise eingesetzte LiPF₆. Durch den erfindungsgemässen Zusatz von LiBOB und/oder LiDFOB verbessert sich die Zellperformance deutlich.

In einer besonderen Ausgestaltung beträgt die Konzentration des Leitsalzes im Elektrolyt 0,1 bis 3 mol pro kg Elektrolyt bevorzugt 0,25 bis 2 mol pro kg Elektrolyt, besonders bevorzugt 0,5 bis 1,5 mol pro kg Elektrolyt.

Erfindungsgemäss weist LiBOB eine Konzentration von 10 mmol/kg bis 500 mmol/kg im Elektrolyten auf.

Erfindungsgemäss weist LiDFOB eine Konzentration von 10 mmol bis 1,25 mol pro kg Elektrolyt auf, bevorzugt 10 mmol bis 750 mmol pro kg Elektrolyt und besonders bevorzugt 20 bis 250 mmol pro kg Elektrolyt.

In einer besonderen Ausgestaltung umfasst der Elektrolyt für Lithium-Ionen Batterien ein Additiv ausgewählt aus der Liste umfassend Vinylencarbonat (VC), Ethylensulfit, und Sultone. Besonders bevorzugt wird das mindestens eine Sulton ausgewählt aus der Liste umfassend α-Hydroxy-o-toluolsulfonsäure-γ-sulton (HTSS) mit der Formel 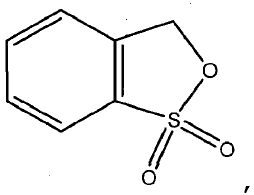 2,4-Butansulton (2,4-BS), 1,3-Propansulton (1,3-PS), 1,3-Dithiolan-2-thion mit der Formel 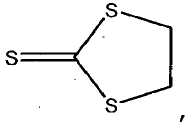 3H-2,1-Benzoxathiol- 3-on 1,1-dioxid mit der Formel 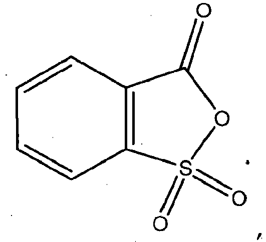 4-Toluolsulfonsäureethylester mit der Formel 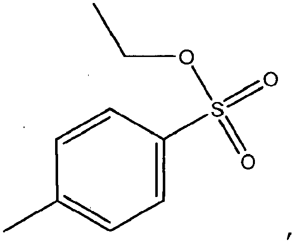 1,8-Naphthosulton mit der Formel 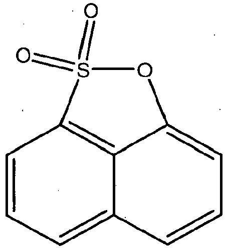 und 1,3-Dithiol-2-thion mit der Formel

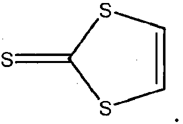

Die Additive steigern dabei die Langzeitstabilität der Zelle. Es ist aus toxikologischen Untersuchungen bekannt, dass 1,3-Propansulton sowie die eng verwandten Butansultone krebserregende Wirkungen aufweisen können. Aus diesem Grund werden Ersatzstoffe für diese Additive gesucht. Überraschenderweise wurde gefunden, dass HTSS als Additiv einen vergleichbaren Effekt in den erfindungsmäßigen Elektrolyten bewirkt. Dieses ist nicht als kanzerogen eingestuft und wird deshalb bevorzugt verwendet.

Weiterhin können dem Elektrolyten Additive zugegeben sein, die gewöhnlicherweise in Lithium-Ionen Zellen eingesetzt werden. Diese schließen Überladungsschutzadditive wie z.B. Cyclohexylbenzol und alkylierte Pyrrolidone wie z.B. Ethylpyrrolidon mit ein.

In einer weiteren Ausgestaltung umfasst der Elektrolyt Triethylphosphat (TEP). Vorzugsweise beträgt der Anteil von TEP im organischen Lösungsmittel bis zu 25 Gew.-%.
TEP wirkt sich positiv auf die Zellstabilität aus. Bei einem Zusatz von 5 Gew.-% bezogen auf die Lösungsmittel, die hinsichtlich der Kapazitätserhaltung noch unkritisch sind, sind verbesserte spezifische Entladekapazitäten bei niedrigen C-Raten und/oder eine verbesserte Langzeitstabilität möglich.

Besondere Ausgestaltungen der Elektrolytgemische mit den quantitativen Angaben der Lösungsmittel, Leitsalze und Additive sind in der Tabelle 1 dargestellt. Die Elektrolytgemische wurden in der Weise hergestellt, dass die in Tabelle 1 angegebenen Leitsalze und Additive in dem entsprechenden Lösungsmittel, bzw. Lösungsmittelgemisch, gelöst wurden.

**Tabelle 1. Elektrolytgemische**

| Nr. | Lösungsmittel (Gew.-%/ Gew.-%) | Leitsalz (mol/kg) | Additiv 1 (mol/kg) | Additiv 2 (mol/kg) | Additiv 3 (Gew.-%) |
|---|---|---|---|---|---|
| EL-1 | EC-DMSN (80:20) | LiBF₄ (1) | - | - | - |
| EL-2 | EC-DMSN (80:20) | LiBF₄ (0.9) | LiBOB (0.1) | - | |
| EL-3 | EC-DMSN (80:20) | LiTFSI (1) | - | - | - |
| EL-4 | EC-DMSN (80:20) | LiTFSI (0.9) | LiBOB (0.1) | - | - |
| EL-5 | EC-DMSN (80:20) | LiPF₆ (1) | - | - | - |
| EL-6 | EC-DMSN (80:20) | LiPF₆ (0.9) | LiBOB (0.1) | - | - |
| EL-7 | PC (100) | LiTFSI (1) | - | - | 2,4-BS (5) |
| EL-8 | PC (100) | LiTFSI (1) | - | - | VC (5) |
| EL-9 | SL | LiTFSI (1) | - | - | VC (5) |
| EL-10 | EC-DMSN (80:20) | LiBF₄ (0) + LiPF₆ (1) | LiBOB (0.05) | TPFPB (0.02) | - |
| EL-11 | EC-DMSN (80:20) | LiBF₄ (0.25) +LiPF6 (0.75) | LiBOB (0.05) | TPFPB (0.02) | - |
| EL-12 | EC-DMSN (80:20) | LiBF₄ (0.5) +LiPF6 (0.5) | LiBOB (0.05) | TPFPB (0.02) | |
| EL-13 | EC-DMSN (80:20) | LiBF₄ (0.75) + LiPF6 (0.25) | LiBOB (0.05) | TPFPB (0.02) | - |
| EL-14 | EC-DMSN (80:20) | LiBF₄ (1.0) + LiPF6 (0) | LiBOB (0.05) | TPFPB (0.02) | - |
| EL-15 | EC-DMSN-TEP (75:15:10) | LiBF₄ (0.75) + LiPF6 (0.25) | LiBOB (0.05) | TPFPB (0.02) | - |
| EL-16 | EC-DMSN-TEP (75:15:10) | LiBF₄ (0.75) + LiPF6 (0.25) | LiBOB (0.05) | TPFPB (0.02) | 2,4-BS (3) |
| EL-17 | EC-DMSN (80:20) | LiDFOB (1.05) | - | - | - |
| EL-18 | EC-DMSN (80:20) | LiBF₄ (0.77) | LiBOB (0.1) + LiDFOB (0.1) | TPFPB (0.03) | - |
| EL-19 | EC-DMSN (80:20) | LiBF₄ (0.88) | LiDFOB (0.1) | TPFPB (0.03) | - |
| EL-20 | EC-DMSN (80:20) | LiBF₄ (1.25) | LiBOB (0.05) | TPFPB (0.03) | - |
| EL-21 | EC-DMSN (80:20) | LiBF₄ (0.9) | LiBOB (0.1) | TPFPB (0.05) | - |
| EL-22 | EC-DMSN (80:20) | LiBF₄ (0.95) | LiBOB (0.05) | TPFPB (0.025) | - |
| EL-23 | EC-DMSN-TEP (80:15:5) | LiBF₄ (0.93) | LiBOB (0.07) | - | - |
| EL-24 | EC-DMSN-TEP (80:15:5) | LiBF₄ (0.93) | LiBOB (0.07) | - | VC (2) |
| EL-25 | EC-DMSN (80:20) | LiBF₄ (1) | LiBOB (0.05) | TPFPB (0.02) | VC (3) |
| EL-26 | EC-DMSN (80:20) | LiBF₄ (1) | LiBOB (0.05) | TPFPB (0.02) | HTS (3) |
| EL-27 | EC-DMSN (80:20) | LiBF₄ (1) | LiBOB (0.05) | TPFPB (0.02) | VC (2) |
| EL-28 | EC-DMSN (80:20) | LiBF₄ (1) | LiBOB (0.05) | TPFPB (0.02) | HTSS (2) |
| EL-29 | EC-DMSN (80:20) | LiBF₄ (1) | LiBOB (0.05) | TPFPB (0.02) | VC (2)+ HTSS (2) |
| EL-30 | EC-DMSN (80:20) | LiBF₄ (0.95) | LiBOB (0.05) | TPFPB (0.025) | VC (1) + 1,3-PS (1) |
| EL-31 | EC-DMSN (80:20) | LiBF₄ (0.95) | LiBOB (0.05) | TPFPB (0.025) | VC (1) + 2,4-BS (1) |
| EL-32 | EC-DMSN-TEP (80:15.5) | LiPF₆ (0.9) | LiBOB (0.1) | - | - |
| EL-33 | SL-DMSN (90:10) | LiTFSI (1) | - | - | - |
| EL-34 | SL | LiTFSI (0.95) | LiBOB (0.05) | | VC (5) |
| EL-35 | SL+M-SL (50:50) | LiTFSI (1) | - | - | VC (5) |
| EL-36 | EC-DMSN (80:20) | LiPF₆ (0.9) | LiBOB (0.1) | | VC (3) + 1,3-PS (3) |
| EL-37 | EC-DMSN (80:20) | LiPF₆ (0.55) | LiBOB (0.1) LiDFOB (0.1) | - | - |

Die Elektrolytgemische EL 1, EL 3, EL 5, E 7-9, El 17, und EL 33-35 sind herkömmliche Gemische, die zum Vergleich hier aufgelistet sind.

Der Flammpunkt von einem Gemisch aus 80 Gew.-% EC und 20 Gew.-% DMSN betrug 142 °C. Der Flammpunkt von einem Gemisch aus 80 Gew.-% EC und 20 Gew.-% DMSN, welches 1 mol/l LiBF4 enthält, betrug 143 °C. Der Flammpunkt von einem Gemisch aus 80 Gew.-% EC und 20 Gew.-% DMSN, welches 1 mol/l LiTFSI enthält, betrug 148 °C. Der Flammpunkt wurde unter unter Norm ASTM D6450 CRM ±5°C bestimmt. Reines DMSN zeigte einen Flammpunkt von 139.5 °C.

Die vorliegende Erfindung betrifft weiterhin die Verwendung des erfindungsgemäßen Elektrolyten in einer Lithium-Ionen Zelle.

Es wird weiterhin eine Lithium-Ionen-Zelle beansprucht umfassend den erfindungsgemäßen umfassend den Elektrolyten sowie eine Lithium-Ionen-Batterie mit mindestens einer Lithium-Ionen-Zelle umfassend den erfindungsgemäßen Elektrolyten.

Es war überraschend, dass der erfindungsgemäße Elektrolyt einen Flammpunkt von über 140°C aufweist, ohne dass die Zellperformance bei C-Raten bis 2C wesentlich (d.h. >30%) einbricht. Eine Zellperformance über 110 mAh/g bei Lade- und Entladeraten von bis zu 2C bleibt erhalten. Die spezifische Kapazität des verwendeten NMC-Materials betrug dabei 150 mAh/g. Herkömmliche Elektrolyte können beide Eigenschaften der Zellsicherheit mit einem erhöhten Flammpunkt und einer erhöhten Zellperformance nicht gewährleisten.

Ein besonderer Vorteil der vorliegenden Erfindung ist, Elektrolyte mit einem Flammpunkt von über 130°C bereitzustellen, bei denen die Zellperformance bei Lade-und Entladeraten von bis zu 1,5 C nicht wesentlich einbricht, sondern auf einem Niveau von über 75% der verfügbaren Zellkapazität bleibt. Zudem ist die Lithium-Diffusion ausreichend und die erfindungsgemäßen Gemische bleiben bis zu -20°C flüssig. Die erfindungsgemäßen Elektrolyte sind außerdem bis >5 V vs. Li/Li⁺ stabil bei Verwendung einer inerten Elektrode wie z.B. Platin.

Der erfindungsgemäße Elektrolyt ist damit für langsames bis mittleres Zyklieren sehr gut geeignet.

Ein weiterer Vorteil der vorliegenden Erfindung ist, dass die Hauptkomponenten EC und DMSN nicht giftig sind, in hoher Reinheit (über 99,99%) verfügbar sind sowie aufgrund ihrer Eigenschaften oxidationsstabil sind, eine solid electrolyte interface (SEI) auf der Graphitelektrode ausbilden und preiswert zur Verfügung stehen.

Die Erfindung wird im Folgenden anhand von Ausführungsbeispielen und den Figuren näher erläutert. Hierbei zeigen:
**Fig. 1** die spezifische Entladekapazitäten von NMC/C Zellen mit verschiedenen Elektrolytgemischen.
**Fig. 2** die spezifische Leitfähigkeit vs. die Temperatur von Elektrolytgemischen der angegebenen Lösungsmittel mit jeweils 1 mol/kg LiTFSI als Leitsalz.
**Fig. 3** die oxydative Stabilität verschiedener Elektrolytgemischen.
**Fig. 4** das Zyklenverhalten eines erfindungsgemäßen Elektrolytgemischs EL-32 bei einem erhöhten Temperaturverlauf. Die ersten 100 Zyklen werden nicht wiedergegeben. Gezeigt wird die Entlade-C-Rate (Sterne) und die spezifische Entladekapazität (Kreise).
**Fig. 5** das Zyklenverhalten eines erfindungsgemäßen Elektrolytgemischs EL-32 bei Raumtemperatur (25±0,5°C). Abgebildet sind die Entlade-C-Rate (Sterne) und die spezifische Entladekapazität (Kreise).

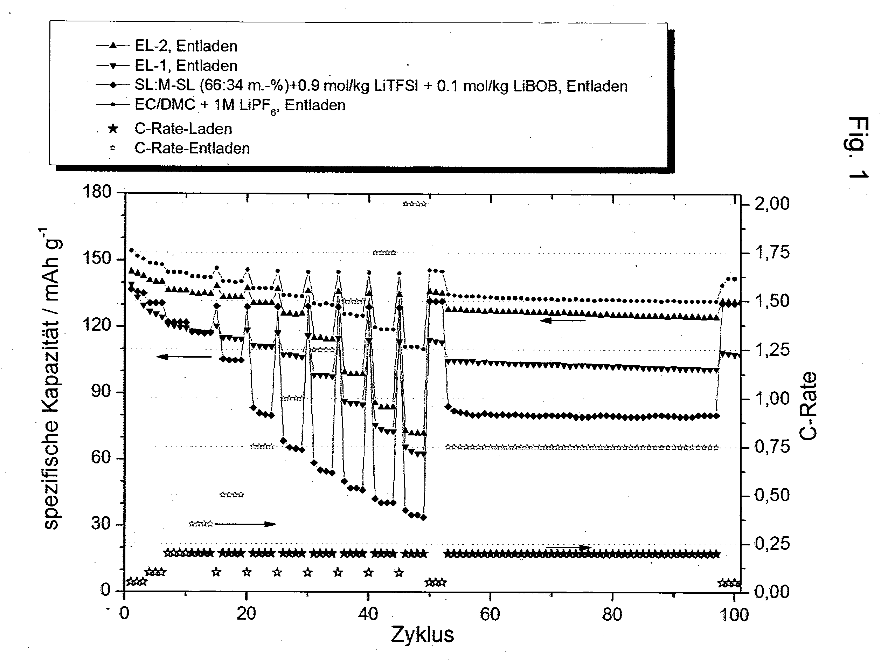

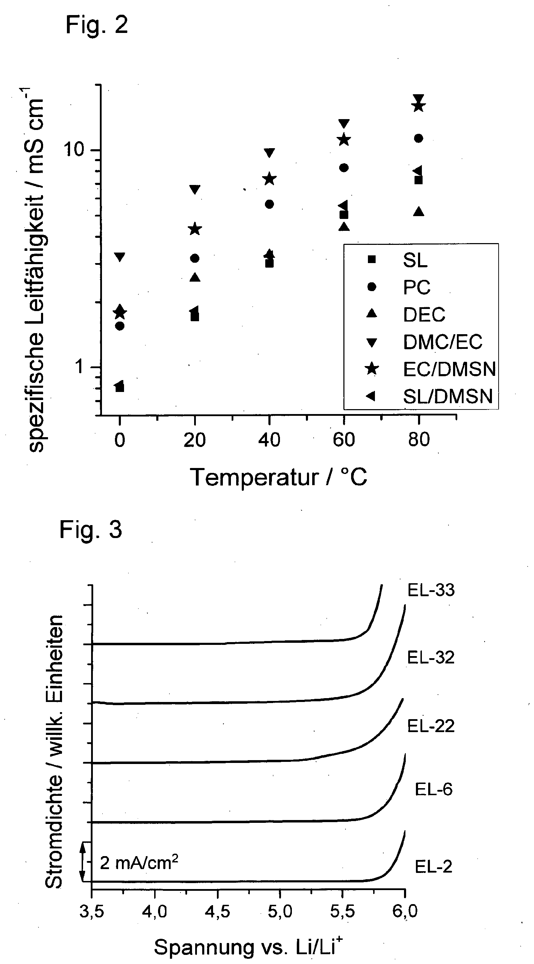

In **Fig. 1** sind die spezifische Entladekapazitäten von NMC/C Zellen mit verschiedenen Elektrolytgemischen dargestellt. **Fig. 2** zeigt die spezifische temperaturabhängige Leitfähigkeit der Elektrolytgemische. Die erfindungsgemäßen Elektrolyte wurde mit herkömmlichen Elektrolyten mit vergleichbaren Flammpunkten verglichen. Als Leitsalz wurde LiTFSI verwendet. Der DMSN-Elektrolyt zeichnet sich dadurch aus, dass dessen Leitfähigkeit überraschenderweise über den gesamten Temperaturverlauf höher ist als die von Elektrolyten mit vergleichbaren Flammpunkten. Nur Mischungen mit deutlich niedrigeren Flammpunkten (EC/DMC, Flammpunkt 24 °C) weisen geringfügig höhere Leitfähigkeiten auf. Beispielsweise ist die Leitfähigkeit des DMSN-basierten Elektrolyten bei Raumtemperatur etwa 2.5-mal höher als die eines Sulfolan-basierten Elektrolyten. Die Leitfähigkeit einer Lösung von LiPF₆ (1 mol/kg) in EC/DMSN (80:20. m.-%) betrug 5.3 mS/cm (20 °C). Mit LiBF₄ (1 mol/kg in EC/DMSN 80:20 m.-%) wurde 4.4 mS/cm erhalten (20 °C). Somit weisen die erfindungsgemäßen Elektrolyte zu einem hohen Flammpunkt auch eine hohe Leitfähigkeit.

In **Fig 3****.** wird die oxydative Stabilität erfindungsgemäßer Elektrolytgemischen aus Tabelle 1 dargestellt. Dabei wurde bei einer Scanrate von 0,5 mV/s, in einer Pt/Li/Li 3-ElektrodenAnordnung und in einem Spannungsbereich von 3 bis 6 V gemessen. Alle Elektrolytgemische zeigen eine außergewöhnlich hohe oxidative Stabilität von bis zu 5,5 V.

### Ausführungsbeispiel 1:

In diesem Ausführungsbeispiel wurden 287,1 mg LiTFSI, 570,3 mg EC und 142,6 mg DMSN gemischt und die oydative Stabilität des dabei hergestellten Elektrolytgemischs in einer Swagelok®-Zelle mit den Elektroden Platin als Arbeitselektrode und Lithium als Referenzelektrode und Gegenelektrode in einer 3-ElektrodenAnordnung gemessen. Wie es Fig.2. zeigt wurde für die oxidative Zersetzung ein Wert von 5.5 V ermittelt.

### Ausführungsbeispiel 2:

In diesem Ausführungsbeispiel wurde Knopfzellen der Größe CR2032 mit dem Elektrolyten EL-32 aus Tabelle 1 hergestellt. Dazu wurden aus kommerziellen Elektrodenfolien einseitig beschichtete Plättchen im Durchmesser von 15 mm ausgestanzt. Als aktive Elektrodenmaterialien wurden Graphit und LiNi_{1/3}Co_{1/3}Mn_{1/3}O₂ (NMC) verwendet. Die Kapazitäten der NMC-Plättchen pro Plättchen (d = 15 mm) betrug 3.45 mAh bei einer nutzbaren spezifischen Kapazität von 150 mAh/g. Die Kapazität des Graphits war 5.52 mAh pro Plättchen (d = 15 mm) bei einer nutzbaren spezifischen Kapazität von 330 mAh/g. Die angegebene C-Rate ist auf die tatsächlich verfügbare Kapazität von 54% (150 mAh/g) der theoretisch möglichen spezifischen Kapazität (Cₜₕₑₒ. = 277.85 mAh/g) von NMC berechnet. Als Separator wurde ein Glasfaserplättchen (Whatman GF/B) verwendet. Die Elektrolytmenge betrug 140 µl.

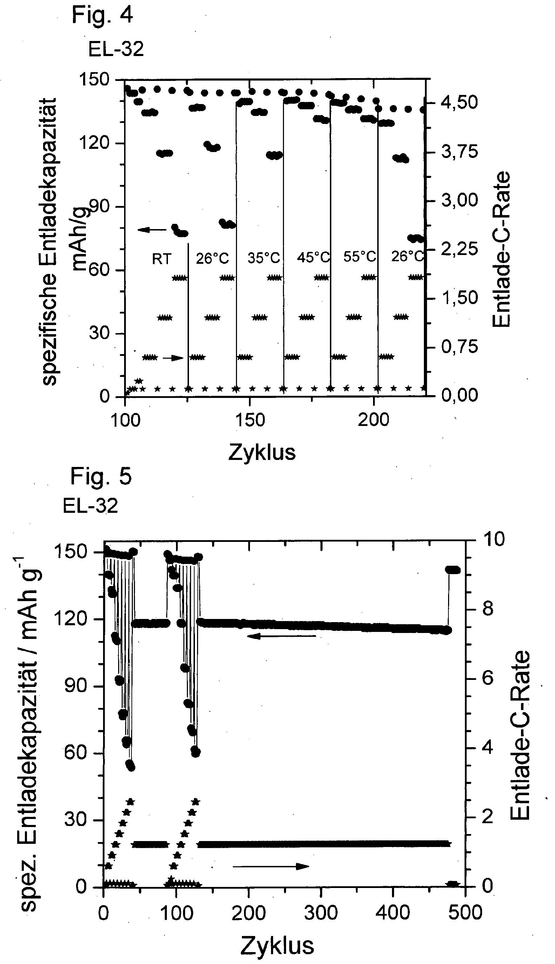

**Fig. 4** stellt die Ergebnisse des Zyklenverhaltens bei einem erhöhten Temperaturverlauf dar. Dabei sind die ersten hundert Zyklen bei Raumtemperatur in der Fig.4 nicht enthalten. Abgebildet ist die Entlade-C-Rate (Sterne) sowie die spezifische Entladekapazität (Kreise).Die Zelle zeigte zu Beginn (nach 4 Zyklen bei 0.1 C) eine spezifische Kapazität von 145 mAh/g. Die Zelle wurde für 100 Zyklen zwischen 3 V und 4.2 V zykliert. Nach 100 Zyklen wurde bei einem langsamen Zyklus (0.06 C) die volle spezifische Kapazität wieder erhalten (146 mAh/g). Anschließend wurde das thermische Verhalten der Zelle untersucht (Fig.3). Die C-Rate in diesem Beispiel ist auf die tatsächlich verfügbare spezifische Kapazität von 150 mAh/g berechnet. Das bedeutet, dass bei einer Aktivmasse von 23.2 mg in der Zelle mit einer Kapazität von 3.48 mAh gerechnet wurde (1 C entspricht dann einem Strom von 3.48 mA). Die Mischung weist die positive Eigenschaft auf, dass bereits ab 45°C bei 1.9 C die Entladeperformance nur unwesentlich einbricht und einen Wert von >94% der spezifischen Entladekapazität bei 0.1 C erreicht. Nach 18 zum Teil langsamen Zyklen (0.1 C) bei 55°C degradiert die Zelle leicht, liefert aber immer noch nach weiteren 100 Zyklen mit 1C Entladerate bei 25 °C im Anschluss an das abgebildete Temperaturprogramm eine spezifische Kapazität von 134 mAh/g (0.1 C). Dies entspricht >92% der ursprünglichen spezifischen Kapazität zu Beginn.

**Fig. 5** zeigt die Ergebnisse des Zyklenverhaltens bei Raumtemperatur. Abgebildet sind die Entlade-C-Rate (Sterne) sowie die spezifische Entladekapazität (Kreise). Die Zelle zeigte zu Beginn (nach 4 Zyklen bei 0.1 C) eine spezifische Kapazität von 151 mAh/g. Die Zelle wurde für 500 Zyklen zwischen 3 V und 4.2 V mit C-Raten bis 2.4 C zykliert (Fig. 4). Die Lade-C-Rate betrug maximal 0.25 C (konstant Strom Laden bis 4.2 V Abschaltspannung). Das besondere an der Elektrolytmischung ist, dass trotz sehr hohem Flammpunkt von >140°C bei einer moderaten C-Rate von 1 C eine spezifische Kapazität von 131 mAh/g erreicht wurde. Weiterhin zeigte die Zelle nach 500 Zyklen eine spezifische Restkapazität von 142 mAh/g (0.05 C). Dies entspricht einer Restkapazität von > 94% und liegt somit deutlich vor dem Lebensdauerende von <80% (entspricht 121 mAh/g).

### Ausführungsbeispiel 3:

Es wurden Zellen mit den in Tabelle 1 beschriebenen Elektrolyten nach der Vorschrift von dem Ausführungsbeispiel 2 gebaut und mit einem definierten Entladeprogramm zykliert, welches die in Tab. 2 angegebenen C-Raten enthielt. Es wurde das Ladeverfahren konstant Strom (CC mit 0.25 C maximal) gewählt, bis die Abschaltspannung von 4.2 V erreicht wurde. Anschließend wurde bis zu einer Entlade-Stromrate von 2.5 C entladen (Abschaltspannung = 3V). In Tabelle 2 sind in einer Übersicht die bei den entsprechenden C-Raten erhaltenen spezifischen Kapazitäten in mAh/g zusammengestellt. Die Aktivmasse der Zellen betrug je Knopfzelle zwischen 22 und 24 mg und wurde für jede.Zelle exakt bestimmt (Fehler in der Masse < 0,3 mg). EF ist die Effizienz nach 100 Zyklen in % bezüglich Restkapazität [(spezifische Kapazität nach 100 Zyklen bei 0.1 C) / (spezifische Kapazität zu Beginn bei 0.1 C)]. Zwischenzeitlich können die Zellen schneller zykliert worden sein.

Die Beispiele zeigen, dass mit den in der Erfindung beschriebenen Elektrolyten sowohl lange Lebensdauern der Zellen realisiert werden können (nach 200 Zyklen z.T. Restkapazitäten von >95%) als auch - trotz hohe Flammpunkte von > 140 °C - C-Raten von bis zu 2.5 C in Dauerbelastung gut ausgehalten werden. Die Performance bekannter Systeme (z.B. Elektrolytgemische EL-7 bis EL-9 und EL-33 bis EL-35 als Vergleich gezeigt) ist dagegen deutlich schlechter.

**Tabelle 2. Spezifische Kapazitäten verschiedener Elektrolytgemische bei angegebenen C-Raten in mAh/g.**

| Nr. | 0.1 C Anfang | 0.6 C | 1 C | 1.5 C | 1.8 C | 2.4C | 0.1 C @100 | EF @100 | 0.1 C @200 |
|---|---|---|---|---|---|---|---|---|---|
| EL-1 | 125,2 | 118,6 | 115,6 | 109,1 | 97,8 | 77,9 | 107,6 | 85,9 | 102,8 |
| EL-2 | 149,3 | 141,9 | 138,4 | 130,5 | 115,4 | 85,4 | 137,1 | 91,8 | 116,8 |
| EL-3 | 152,4 | 134,9 | 115,8 | 56,3 | 39,3 | 22,8 | 147,5 | 96,8 | 137,5 |
| EL-4 | 150,8 | 140,2 | 132,0 | 108,7 | 97,5 | 78,2 | 150,5 | 99,8 | 138,8 |
| EL-5 | 133,3 | 124,2 | 120,1 | 94,7 | 79,3 | 60,8 | 114, 7 | 86 | 110,2 |
| EL-6 | 151,1 | 142,1 | 135,7 | 108,4 | 92,8 | 69,0 | 148,4 | 98,2 | 147,2 |
| EL-7 | 150 | 130 | 117 | 75 | 61 | 39 | 145 | 96,7 | 133 |
| EL-8 | 153 | 130 | 118 | 80 | 62 | 38 | 139 | 90,8 | 129 |
| EL-9 | 156 | 116 | - | - | - | - | 143 | 91,7 | - |
| EL-10 | 151 | 145 | 139 | 108 | 92 | 69 | 146 | 96,7 | 145 |
| EL-11 | 150 | 144 | 141 | 121 | 101 | 72 | 145 | 96,7 | 144 |
| EL-12 | 152 | 146 | 143 | 131 | 115 | 88 | 139 | 91,4 | 126 |
| EL-13 | 147 | 143 | 141 | 132 | 118 | 90 | 135 | 91,8 | 130 |
| EL-14 | 150 | 145 | 143 | 135 | 124 | 96 | 141 | 94 | - |
| EL-15 | 145 | 132 | 126 | 109 | 73 | 51 | 136 | 93,8 | 129 |
| EL-16 | 143 | 130 | 119 | 111 | 53 | 34 | 141 | 98,6 | 135 |
| EL-17 | 107,6 | 99,8 | 98,9 | 92,7 | 82,1 | 63,5 | 106,7 | 99,2 | 112,1 |
| EL-18 | 148,3 | 143,5 | 141,3 | 135,2 | 125,1 | 95,7 | 145,2 | 97,9 | 118,1 |
| EL-19 | 135,4 | 129,1 | 127,1 | 120,1 | 111,9 | 87,3 | 126,9 | 93,7 | 107,6 |
| EL-20 | 148 | 136 | 131 | 102 | 87 | 67 | 140 | 94,6 | - |
| EL-21 | 135 | 127 | 125 | 99 | 84 | 61 | 133 | 98,5 | 125 |
| EL-22 | 142 | 137 | 135 | 121 | 108 | 84 | 134 | 94,4 | - |
| EL-23 | 138 | 127 | 121 | 81 | 62 | 38 | 136 | 98,6 | - |
| EL-24 | 133 | 114 | 106 | 62 | 46 | 28 | 123 | 92,5 | - |
| EL-30 | 146 | 141 | 136 | 127 | 118 | 89 | 138 | 94,5 | - |
| EL-31 | 146 | 139 | 137 | 127 | 120 | 95 | 140 | 95,9 | - |
| EL-32 | 150 | 140 | 131 | 92 | 77 | 61 | 149 | 99,3 | 145 |
| EL-33 | 90 | 52 | 42 | 29 | 25 | 18 | 76 | 84,4 | - |
| EL-34 | 146 | 91 | - | - | - | - | 133 | 91,1 | - |
| EL-35 | 147 | 86 | - | - | - | - | 121 | 82,3 | - |
| EL-37 | 153 | 144 | 140 | 127 | 108 | 80 | 152 | 99,3 | - |

### Ausführungsbeispiel 4:

Es wurden Zellen mit den in Tabelle 3 beschriebenen Elektrolyten nach der Vorschrift von Ausführungsbeispiel 2, jedoch mit einem keramisch beschichteten Separator und 50 µl Elektrolyt, gebaut und mit einem definierten Entladeprogramm zykliert, welches die in Tab. 3 angegebenen C-Raten enthielt. Es wurde das Ladeverfahren konstant Strom - konstant Spannung (bei 4.2 V, Abschaltstrom C/15) gewählt. Anschließend wurde bis zu einer Entlade-Stromrate von 2 C entladen (Abschaltspannung = 3V). In Tabelle 3 sind in einer Übersicht die bei den entsprechenden C-Raten erhaltenen Kapazitäten in mAh zusammengestellt. Die Kapazität der Knopfzellen betrug 3,1±0,1 mAh. EF entspricht der Effizienz nach 100 Zyklen in % bezüglich Restkapazität [(spezifische Kapazität nach 100 Zyklen bei 0.1 C) / (spezifische Kapazität zu Beginn bei 0.1 C)] Zwischenzeitlich können die Zellen schneller zykliert worden sein. Auch diese Beispiele der Erfindung belegen die gute Performance der Elektrolyte unter Beibehaltung der niedrigen Elektrolytentflammbarkeit.

**Tabelle 3. Spezifische Kapazitäten verschiedener Elektrolytgemische bei angegebenen C-Raten in mAh/g.**

| Nr. | 0.1 C Anfang | 0.5 C | 1 C | 1.5 C | 2.0 C | 0.1 C @50 | 0.1C @100 | EF @100 |
|---|---|---|---|---|---|---|---|---|
| EL-25 | 3,09 | 2,87 | 2,77 | 2,5 | 1,94 | 2,93 | - | - |
| EL-26 | 3,14 | 2,93 | 2,76 | 2,31 | 1,63 | 3,07 | - | - |
| EL-27 | 1,92 | 1,81 | 1,80 | 1,74 | 1,62 | 1,82 | 1,71 | 89,1 |
| EL-28 | 2,59 | 2,42 | 2,34 | 2,19 | 1,89 | 2,3 | 1,95 | 75,3 |
| EL-29 | 3,19 | 2,99 | 2,90 | 2,69 | 2,14 | 3,12 | 2,82 | 88,4 |
| EL-36 | 3,07 | 2,86 | 2,73 | 2,39 | 2,02 | 3,04 | 2,92 | 95,2 |

### Ausführungsbeispiel 5:

Es wurden Knopfzellen der Größe CR2032 mit ausgewählten Elektrolyten aus Tabelle 1 hergestellt. Dazu wurden aus kommerziellen Elektrodenfolien einseitig beschichtete Plättchen im Durchmesser von 15 mm ausgestanzt. Als aktive Elektrodenmaterialien (Lieferant/Hersteller: MTI Corporation) wurden Graphit und Lithiumeisenphosphat (LFP) verwendet. Die Kapazitäten der LFP-Plättchen pro Plättchen (d = 15 mm) betrug 3.6 mAh bei einer spezifischen Kapazität von 127 mAh/g. Die Kapazität des CMS Graphits betrug 4.7 mAh pro Plättchen (d = 15 mm) bei einer spezifischen Kapazität von 330 mAh/g. Die angegebene C-Rate ist auf den Wert von 75% der theoretisch möglichen spezifischen Kapazität (Cₜₕₑₒ. = 169.88 mAh/g) von LFP berechnet. In Tabelle 4 sind in einer Übersicht die bei den entsprechenden C-Raten erhaltenen Kapazitäten zusammengestellt. Die spezifische Kapazität des Aktivmaterials betrug 127 mAh. EF entspricht der Effizienz nach 100 Zyklen in % bezüglich Restkapazität [(spezifische Kapazität nach 100 Zyklen bei 0.1 C) / (spezifische Kapazität zu Beginn bei 0.1 C)] Zwischenzeitlich können die Zellen schneller zykliert worden sein.

**Tabelle 4. Spezifische Kapazitäten des Elektrolytgemisches EL-4 bei angegebenen C-Raten in mAh/g.**

| C-Rate | 0.1C | 0.2C | 0.5C | 0.75C | 1 C | 1.5 C | 2 C | 0.05 C @ 50 | EF |
|---|---|---|---|---|---|---|---|---|---|
| EL-4 | 96,2 | 92,1 | 87,4 | 83,8 | 78,1 | 64,5 | 52,9 | 85,6 | 88.9 |

### Ausführungsbeispiel 6

In diesem Ausführungsbeispiel wurden Pouch-Bag-Zellen der Größe 4x5 cm mit einer Kapazität von 43 mAh mit dem Elektrolyten EL-36 aus Tabelle 1 hergestellt. Dazu wurden aus kommerziellen Elektrodenfolien einseitig beschichtete Metallfolien ausgestanzt. Als aktive Elektrodenmaterialien wurden Graphit und LiNi_{1/3}Co_{1/3}Mn_{1/3}O₂ (NMC) verwendet. Als Separator wurde ein keramisch beschichteter Separator auf einem Polymerflies verwendet. In Tabelle 5 sind die Werte für die enthaltenen Entladekapazitäten aufgelistet. Die angegebene C-Rate ist auf die tatsächlich verfügbare Kapazität von 41 mAh nach der Formierung bezogen. EF entspricht der Effizienz nach 100 Zyklen in % bezüglich Restkapazität [(spezifische Kapazität nach 100 Zyklen bei 0.05 C) / (spezifische Kapazität zu Beginn nach Formierung)] Zwischenzeitlich können die Zellen schneller zykliert worden sein.

**Tabelle 5. Spezifische Kapazitäten des Elektrolytgemisches EL-4 bei angegebenen C-Raten in mAh/g.**

| C-Rate | 0.2C | 0.5C | 1.1C | 1.6C | 2.1C | 2.6C | 3.2C | 0.05 C @ 100 | EF / % |
|---|---|---|---|---|---|---|---|---|---|
| EL-36 | 39,9 | 39,0 | 36,5 | 31,1 | 24,8 | 19,7 | 16,0 | 39,6 | 96,6 |

**Bezugszeichenliste**

| | |
|---|---|
| α-Hydroxy-o-toluolsulfonsäure-γ-sulton | HTSS |
| Vinylencarbonat | VC |
| Ethylencarbonat | EC |
| Dimethylsulfon | DMSN |
| Sulfolan | SL |
| Propylencarbonat | PC |
| Lithiumeisenphosphat | LFP |
| Lithiumnickelcolbaltmanganoxid | NMC |
| Graphit | C |
| Tris(pentafluorophenyl)boran | TPFPB |
| Lithium bis(oxalato)borat | LiBOB |
| Lithiumdifluorooxalatoborat | LiDFOB |
| Diethylcarbonat | DEC |
| Dimethylcarbonat | DMC |
| 2,4-Butansulton | 2,4-BS |
| 1,3-Propansulton | 1,3-PS |
| Massenanteil in % | Gew.-% |

## Patentansprüche

1. Elektrolyt für Lithium-Ionen Batterien umfassend ein Gemisch aus Ethylencarbonat (EC) und/oder mindestens einem einfach- fluorierten Ethylencarbonat und/oder mindestens einem mehrfach-fluorierten Ethylencarbonat, mindestens einem Sulfonderivat und mindestens einer Lithiumquelle als Leitsalz, wobei das Gemisch einen Flammpunkt über 85°C aufweist, und wobei der Flammpunkt unter der Norm ASTM D6450 bestimmt wurde, und wobei das Sulfonderivat Dimethylsulfon (DMSN) und/oder Diethylsulfon ist, dadurch charakterisiert, dass der Elektrolyt Lithium bis(oxalato)borat LiBOB in einer Konzentration von 10 bis 500 mmol/kg aufweist, und/oder Lithium difluorooxalatoborat in einer Konzentration von 10 mmol/kg bis 1,25 mol/kg aufweist.

2. Elektrolyt für Lithium-Ionen Batterien nach Anspruch 1, wobei das Massenverhältnis des zyklischen Carbonats zu dem Sulfonderivat zwischen 20:1 und 3:1 beträgt.

3. Elektrolyt für Lithium-Ionen Batterien nach Anspruch 1 oder 2, wobei das Leitsalz LiBF₄ und/oder LiPF₆ und/oder Lithium bis(trifluoromethansulfonyl) imid (TFSI) umfasst.

4. Elektrolyt für Lithium-Ionen Batterien nach Anspruch 3, wobei die Lithiumkonzentration im Elektrolyten 0,1 bis 3 mol pro kg Elektrolyt bevorzugt 0,25 bis 2 mol pro kg Elektrolyt, besonders bevorzugt 0,4 bis 1,5 mol pro kg Elektrolyt umfasst.

5. Elektrolyt für Lithium-Ionen Batterien nach einem der Ansprüche 1 bis 4, umfassend ein Additiv ausgewählt aus der Liste umfassend Vinylencarbonat (VC), Ethylensulfit, α-Hydroxy-o-toluolsulfonsäure-γ-sulton (HTSS), 2,4-Butansulton (2,4-BS), 1,3-Propansulton (1,3-PS), 1,3-Dithiolan-2-thion, 3H-2,1-Benzoxathiol-3-on-1,1-dioxid, 4-Toluolsulfonsäureethylester, 1,8-Naphthosulton und 1,3-Dithiol-2-thion.

6. Elektrolyt für Lithium-Ionen Batterien nach einem der Ansprüche 1 bis 5umfassend ein organisches Phosphat wie z.B. Triethylphosphat(TEP).

7. Verwendung des Elektrolyten nach einem der Ansprüche 1. bis 6 als Elektrolyt in einer Lithium-Ionen Zelle.

8. Lithium-Ionen Zelle umfassend den Elektrolyt nach einem der Ansprüche 1 bis 6.

9. Lithium-Ionen Batterie mit mindestens einer Lithium-Ionen Zelle, die einen Elektrolyten nach einem der Ansprüche 1 bis 6 umfasst.

## Claims

1. Electrolyte for lithium-ion batteries comprising a mixture of ethylene carbonate (EC) and/or at least one single-fluorinated ethylene carbonate and/or at least one multiple-fluorinated ethylene carbonate, at least one sulfone derivate and at least one lithium source as a conducting salt, wherein the mixture has a flash point over 85 °C and wherein the flash point has been determined according to the norm ASTM D6450 and wherein the sulfone derivate is dimethylsulfone (DMSN) and/or diethylsulfone, **characterized in that** the electrolyte comprises lithium bis(oxalato)borate LiBOB in a concentration of 10 to 500 mmol/kg and/or lithium difluoro(oxalate)borate in a concentration of 10 mmol/kg to 1,25 mol/kg.

2. Electrolyte for lithium-ion batteries according to claim 1, wherein the mass ratio of the cyclic carbonate to the sulfone derivate is between 20:1 and 3:1.

3. Electrolyte for lithium-ion batteries according to claim 1 or claim 2, wherein the conducting salt comprises LiBF₄ and/or LiBF₆ and/or lithium bis(trifluoromethanesulfonyl)imide (TFSI).

4. Electrolyte for lithium-ion batteries according to claim 3, wherein the lithium concentration in the electrolyte comprises 0,1 to 3 mol per kg electrolyte, preferably 0,25 to 2 mol per kg electrolyte, particularly preferred 0,4 to 1,5 mol per kg electrolyte.

5. Electrolyte for lithium-ion batteries according to one of the claims 1 to 4, comprising an additive chosen from a list comprising vinylcarbonate (VC), ethylensulfite, α-hydroxy-o-toluolsulfoneacid-y-sultone (HTSS), 2,4-butanesultone (2,4-BS), 1,3-propanesulton (1,3-PS), 1,3-dithiolane-2-thiorie, 3H-2,1-benzoxathiol-3-on-1,1-dioxide, 4-toluolsulfoneacidethylester, 1,8-naphthosultone and 1,3-dithiol-2-thione.

6. Electrolyte for lithium-ion batteries according to one of the claims 1 to 5 comprising an organic phosphate like for example triethylphosphate (TEP).

7. Use of the electrolyte according to one of the claims 1 to 6 as an electrolyte in a lithium-ion cell.

8. Lithium-ion cell comprising the electrolyte according to one of the claims 1 to 6.

9. Lithium-ion battery comprising at least one lithium-ion cell, comprising an electrolyte according to one of the claims 1 to 6.

## Revendications

1. Electrolyte pour batterie lithium-ion comprenant un mélange de carbonate d'éthylène (EC) et/ou au moins d'un carbonate d'éthylène monofluoré et/ou d'un carbonate d'éthylène polyfluoré, au moins d'un dérivé sulfone et au moins d'une source de lithium comme sel conducteur, le mélange présentant un point d'inflammabilité de plus de 85°C, et le point d'inflammabilité étant déterminé selon la norme ASTM D6450 et le dérivé sulfone étant la diméthylsulfone (DMSN) et/ou la diéthylsulfone,
**caractérisé en ce que** l'électrolyte comprend du bisoxalatoborate de lithium (LiBOB) à une concentration comprise entre 10 et
500 mmol/kg, et/ou du difluorooxalatoborate de lithium à une concentration comprise entre 10 mmol/kg et 1,25 mol/kg.

2. Electrolyte pour batterie lithium-ion selon la revendication 1, **caractérisé en ce que** le rapport massique entre le carbonate cyclique et le dérivé sulfone est compris entre 20:1 et 3:1.

3. Electrolyte pour batterie lithium-ion selon la revendication 1 ou 2, **caractérisé en ce que** le sel conducteur comprend LiBF₄ et/ou LiPF₆ et/ou bis(trifluorométhylsulfonyl)imide de lithium (TFSI).

4. Electrolyte pour batterie lithium-ion selon la- revendication 3, **caractérisé en ce que** la concentration de l'électrolyte en lithium est compris entre 0,1 et 3 mol par kg d'électrolyte de préférence entre 0,25 et 2 mol par kg d'électrolyte, plus particulièrement entre 0,4 et 1,5 mol par kg d'électrolyte.

5. Electrolyte pour batterie lithium-ion selon l'une des revendications 1 à 4, comprenant un additif choisi de la liste comprenant le carbonate de vinylène (VC), le sulfite d'éthylène, la γ-sultone d'acide hydroxy-o-toluènesulfonique (HTSS), la 2,4-butanesultone (2,4-BS), la 1,3-propanesultone (1,3-PS), la 1,3-dithiolane-2-thione, le 1,1-dioxyde de 3H-2,1-benzoxathiol-3-one, l'acide toluolsulfonique-4-éthylester, la 1,8-naphthosultone et la 1,3-dithiol-2-thione.

6. Electrolyte pour batterie lithium-ion selon l'une des revendications 1 à 5, comprenant un phosphate organique comme par exemple le triéthylphosphate (TEP).

7. Utilisation de l'électrolyte selon l'une des revendications 1 à 6 en tant qu'électrolyte dans une cellule lithium-ion.

8. Cellule lithium-ion comprenant un électrolyte selon l'une des revendications 1 à 6.

9. Batterie lithium-ion comprenant au moins une cellule lithium-ion, comprenant un électrolyte selon l'une des revendications 1 à 6.
